# EUROPEAN PATENT SPECIFICATION

(11) **EP 4 343 581 B1**
(45) Date of publication and mention of the grant of the patent: **28.10.2026**
(21) Application number: 22868932.9
(22) Date of filing: 16.08.2022
(51) Int. Cl.: G06F 16/44, G06F 3/0484, G06F 3/0483, H04N 21/431, G06F 3/04817, G06F 3/0482, G06F 3/04842, G06F 3/0485, G06F 3/0488

(54) **INFORMATION PROCESSING METHOD AND APPARATUS, AND DEVICE**
INFORMATIONSVERARBEITUNGSVERFAHREN UND -VORRICHTUNG SOWIE VORRICHTUNG
PROCÉDÉ ET APPAREIL DE TRAITEMENT D'INFORMATION, ET DISPOSITIF

(30) Priority: 16.09.2021 CN 202111085893
(43) Date of publication of application: 27.03.2024
(73) Proprietor: Douyin Vision Co., Ltd., Beijing 100041 (CN)
(72) Inventor: SHI, Jinpeng, Beijing 100086 (CN); YANG, Dongyun, Beijing 100086 (CN); ZHANG, Qinyan, Beijing 100086 (CN); TUO, Zhipeng, Beijing 100086 (CN); WANG, Yulu, Beijing 100086 (CN)
(74) Representative: Marks & Clerk LLP
(86) International application number: PCT/CN2022/112889
(87) International publication number: WO 2023/040556

(56) References cited:
- EP-A1- 4 184 926
- CN-A- 112 073 583
- CN-A- 113 179 446
- CN-A- 113 179 446
- CN-A- 113 779 281
- US-A1- 2011 289 459
- US-A1- 2020 366 963

## Description

### TECHNICAL FIELD

The present disclosure relates to the field of information processing technologies, and in particular, to an information processing method, a device, an apparatus, an electronic apparatus, a computer-readable storage medium, a computer program product, and a computer program.

### BACKGROUND

When a user uses the terminal apparatus to post the multimedia information, the posted multimedia information can be forwarded and shared.

At present, after a terminal apparatus posts the multimedia information, a user may process the multimedia information through the terminal apparatus, for example, performing the operation of forwarding or sharing on the video or audio. The user needs to open a second-level page or a third-level page of the multimedia information to process the multimedia information. For example, the user clicks a posted video in the terminal apparatus, the terminal apparatus jumps to a playing page of the video, the user clicks a function control in the playing page of the video, the function control pops up a forward control, a share control and the like. The user clicks the forward control to finish forwarding the video.

EP2557775A2 is directed towards a video interaction method includes receiving a video posting operation for a first video; in response to the video posting operation, posting the first video; in response to finishing posting the first video, acquiring information about the degree of completion of interaction between the first user and the target prop in the shooting process of the first video; determining a first target object corresponding to the first video according to information about the degree of completion of interaction; and paying the first target object to the account of the first user and displaying a first object information window of the first target object. The first object information window 20 including the confirmation control 21 is displayed within a preset duration after the multimedia information is successfully released, and after the preset duration, the first object information window 20 is cancelled together with the confirmation control 21. The first object information window 20 is used to indicate that the first target object (such as virtual items such as such as a bonus, a special effect, or accumulated points) determined based on the information of the user's interaction with the target props in the shooting process of the video has been paid to the user's account, and the confirmation control 21 is used to indicate that the user has received the first target object.

US2020366963A1 is directed towards a video access methods, wherein the method comprises: receiving entrance presentation data of a video-updated user, wherein the video-updated user includes a user who has a video updated among followed users; displaying an entrance presentation bar on the current terminal interface, and presenting at least one video access entrance in the entrance presentation bar based on the entrance presentation data; and displaying, responsive to a client user's preset operation on any video access entrance in the entrance presentation bar, a video play page corresponding to the preset operation.

CN112073583A is directed towards a multimedia information display method. The method is applied to a terminal device including instant communication terminal.

### Summary

In one aspect, an embodiment of the present disclosure provides an information processing method, including:
acquiring an information posting request, wherein the posting request is used for requesting to post first multimedia information;
in response to the posting request, displaying a first icon corresponding to the first multimedia information in an information posting area of a multimedia page, the multimedia page being a display page of multimedia information;
within a preset time length after the first multimedia information is successfully posted, determining a control area corresponding to the first multimedia information in the posting area based on a position of the first icon in the posting area, wherein a position of the control area is adjacent to the position of the first icon;
displaying the at least one function control corresponding to the first multimedia information in the control area of the posting area within the preset time length after the first multimedia information is successfully posted, wherein the at least one function control is used for performing operation on the first multimedia information; and
after the preset time length, canceling display of the at least one function control in a sliding manner according to a second preset speed and retaining display of the information posting area and the first icon corresponding to the first multimedia information.

In another aspect, the embodiments of the present disclosure provide an information processing apparatus comprising an acquisition module, a response module, and a display module, wherein:
the acquisition module is configured to acquire an information posting request, wherein the posting request is used for requesting to post first multimedia information;
the response module is configured to, in response to the posting request, display a first icon corresponding to the first multimedia information in an information posting area of a multimedia page, the multimedia page being a display page of multimedia information;
the display module is configured to, within a preset time length after the first multimedia information is successfully posted, determine a control area corresponding to the first multimedia information in the control area of the posting area based on a position of the first icon in the posting area, wherein a position of the control area is adjacent to the position of the first icon;
the display module is further configured to display the at least one function control corresponding to the first multimedia information in the posting area within the preset time length after the first multimedia information is successfully posted, wherein the at least one function control is used for performing operation on the first multimedia information, and
the display module is further configured to after the preset time length, cancel display of the at least one function control in a sliding manner according to a second preset speed and retain display of the information posting area and the first icon corresponding to the first multimedia information.

In another aspect, the embodiments of the present disclosure provide an electronic apparatus, comprising: a processor and a memory;
the memory stores computer execution instructions;
the processor executes computer-executable instructions stored by the memory, causing the processor to perform the information processing method described in the first aspect and various possible designs of the first aspect.

In another aspect, the embodiments of the present disclosure provide a computer-readable storage medium having stored therein computer-executable instructions that, when executed by a processor, implement the information processing method described in the first aspect and various possible designs of the first aspect.

In another aspect, the embodiments of the present disclosure provide a computer program product, including a computer program, which when executed by a processor, implements the information processing method described in the first aspect and various possible designs of the first aspect.

In another aspect, the embodiment of the present disclosure provides a computer program that, when executed by a processor, implements the information processing method described in the first aspect and various possible designs of the first aspect.

### BRIEF DESCRIPTION OF THE DRAWINGS

In order to more clearly illustrate the embodiments of the present disclosure or the technical solutions in the related art, the drawings used in the embodiments or the description of the related art will be briefly described below, and it is obvious that the drawings in the following description are some embodiments of the present disclosure, and those skilled in the art can acquire other drawings without inventive word.
Fig. 1 is a schematic view of an application scenario provided by an embodiment of the present disclosure;
Fig. 2 is a schematic flowchart of an information processing method provided by an embodiment of the present disclosure;
Fig. 3 is a schematic process diagram of acquiring an information posting request provided by an embodiment of the present disclosure;
Fig. 4 is a schematic process diagram of displaying a first icon provided by an embodiment of the present disclosure;
Fig. 5 is a schematic flowchart of another information processing method provided by an embodiment of the present disclosure;
Fig. 6A is a schematic diagram of a position relationship between a control area and the first icon provided by an embodiment of the present disclosure;
Fig. 6B is a schematic diagram of a positional relationship between another control area and the first icon provided by an embodiment of the present disclosure;
Fig. 7 is a schematic diagram of a posting area provided by an embodiment of the present disclosure;
Fig. 8 is a display process of a control area provided by an embodiment of the present disclosure;
Fig. 9 is a schematic process diagram of canceling display of the control area provided by an embodiment of the present disclosure;
Fig. 10 is a schematic process diagram of displaying another control area provided by the embodiment of the present disclosure;
Fig. 11 is a schematic process diagram of an information processing method provided by an embodiment of the present disclosure;
Fig. 12 is a schematic structural diagram of an information processing apparatus provided by an embodiment of the present disclosure; and
Fig. 13 is a schematic structural diagram of an electronic apparatus provided by an embodiment of the present disclosure.

### DETAILED DESCRIPTION

To make the objects, technical solutions and advantages of the embodiments of the present disclosure more apparent, the technical solutions in the embodiments of the present disclosure will be described clearly and completely with reference to the drawings in the embodiments of the present disclosure, and it is obvious that the described embodiments are some, but not all embodiments of the present disclosure. Based on the embodiments in the present disclosure, those of ordinary skill in the art can acquire the results without making creative efforts.

In the related art, after a user posts multimedia information using a terminal apparatus, the user can process the multimedia information. For example, when a user posts a video or an audio through an APP (application) in a mobile phone, the user may perform operations of forwarding and sharing the posted video or audio. When a user processes multimedia information, the user needs to open a second-level page or a third-level page corresponding to the multimedia information. For example, a user clicks a posted video in a page of a mobile phone to enter a playing page of the video, and clicks a function control (usually in the upper right corner of the playing page of the video) of the video on the playing page of the video, the function control pops up a forward control, a share control, and the like, and the user clicks the forward control to complete forwarding of the video. However, the above method requires the user to perform multiple operations to process the multimedia information, which results in higher complexity of information processing.

In order to solve the technical problem of high complexity of information processing in the related art, an embodiment of the present disclosure provides an information processing method, wherein an information posting request is acquired, a first icon corresponding to first multimedia information is displayed in an information posting area of a multimedia page in response to the posting request, and after the first multimedia information is successfully posted, a control area corresponding to the first multimedia information is determined in the posting area based on a position of the first icon in the posting area, wherein the position of the control area is adjacent to the position of the first icon, and within a preset time length after the first multimedia information is successfully posted, at least one function control is displayed in the control area of the posting area, and the function control is used to performing operation on the first multimedia information. According to the method, after the first multimedia information is successfully posted, the control area can be generated at the adjacent position of the first icon, the user can conveniently perform operation on the first multimedia information, and after the first multimedia information has been posted for the preset time, the function control for performing operation on the first multimedia information can be displayed in the control area of the terminal apparatus, so that the user can directly click the function control in the control area of the posting area to perform operation on the first multimedia information, and further the complexity of information processing is reduced.

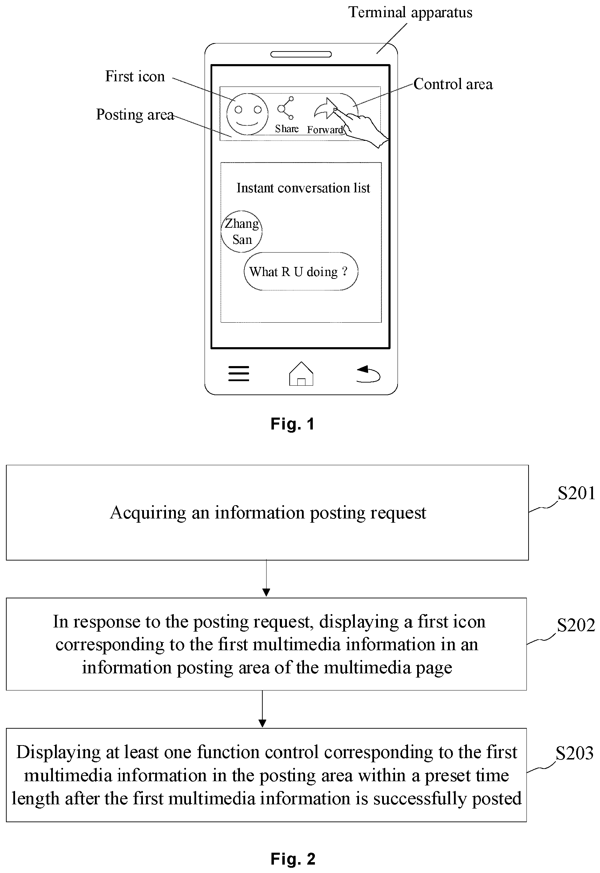

Next, with reference to Fig. 1, an application scenario to which the present disclosure is applied is described in detail.

Fig. 1 is a schematic view of an application scenario provided by an embodiment of the present disclosure. Please refer to Fig. 1, it includes a terminal apparatus. The terminal apparatus comprises a posting area and an instant conversation list. The instant conversation list includes instant chat information. For example, Zhang San sends the conversation information of "What R U doing?". The posting area comprises a first icon and a control area, the first icon is an icon corresponding to the multimedia information posted by the user, and the control area comprises a share control and a forward control. When the user clicks the forward control, the terminal apparatus completes the forwarding of the multimedia information corresponding to the first icon. Therefore, after the multimedia information is successfully posted, the control area can be generated at the adjacent position of the first icon, the user can conveniently perform operation on the first multimedia information, and within the preset time length after the multimedia information is posted, the share control and the forward control can be displayed in the control area of the terminal apparatus. The user can directly click the forward control or the share control in the control area of the posting area, so as to forward or share the multimedia information, and the complexity of multimedia information processing is further reduced.

The following describes the technical solutions of the present disclosure and how to solve the above technical problems in detail with specific embodiments. These several specific embodiments may be combined with each other below, and details of the same or similar concepts or processes may not be repeated in some embodiments. Embodiments of the present disclosure will be described below with reference to the accompanying drawings.

Fig. 2 is a schematic flowchart of an information processing method provided by an embodiment of the present disclosure. Referring to Fig. 2, the method may include:
S201, acquiring an information posting request.

The execution main body of the embodiment of the present disclosure may be a terminal apparatus, or may be an information processing apparatus provided by the terminal apparatus, and the information processing apparatus may be implemented by software, or may be implemented by a combination of software and hardware. Optionally, the terminal apparatus is any device having an information processing function and a display function. For example, the terminal apparatus may be a mobile phone, a notebook computer, a desktop computer, or the like.

The posting request is used for requesting to post the first multimedia information. The first multimedia information may be text information, audio information, video information, and the like. For example, if the first multimedia information is a video, the posting request is used for posting the video in a posting page.

Optionally, the information posting request may be acquired according to an operation of the user in an information editing page of the terminal apparatus. For example, if the user clicks a send button in an information editing page, the terminal apparatus generates an information posting request. For example, in an actual application process, before a user posts a piece of multimedia information, the user needs to edit the multimedia information to be sent in an information editing page of the terminal apparatus, and after the multimedia information to be sent is edited, if the user clicks the send button in the information editing page, the terminal apparatus acquires an information posting request.

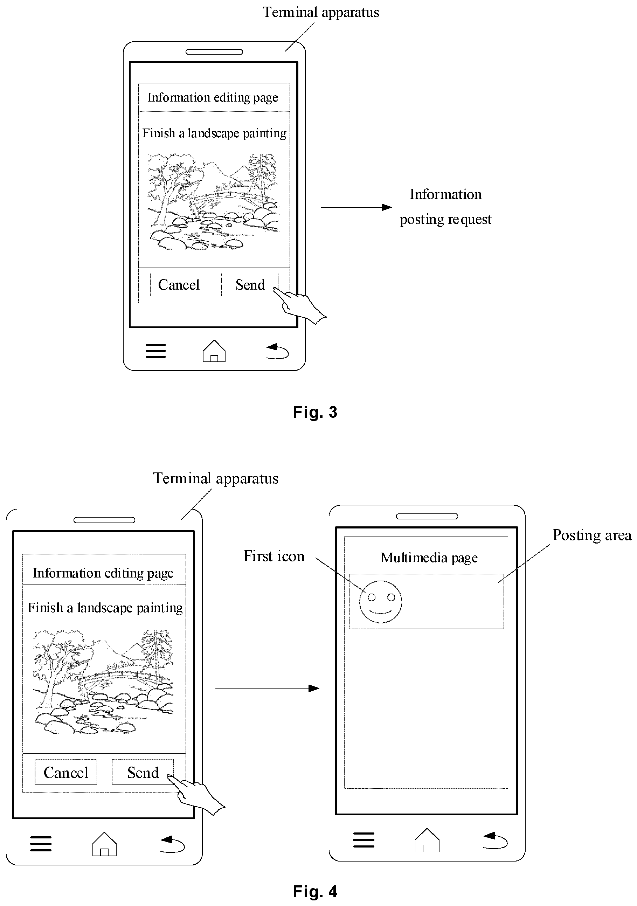

Next, a process of acquiring the information posting request will be described with reference to Fig. 3.

Fig. 3 is a schematic process diagram of acquiring an information posting request provided by an embodiment of the present disclosure. Please refer to Fig. 3, it includes a terminal apparatus. An information editing page is displayed in a display screen of the terminal apparatus. The user adds a landscape painting in the information editing page and edits a text "finish a landscape painting". A cancel button and a send button are included in the information editing page. When the user finishes editing the content to be sent, the user clicks a send button, and the terminal apparatus acquires an information posting request corresponding to the content to be sent.

S202, in response to the posting request, displaying a first icon corresponding to the first multimedia information in an information posting area of the multimedia page.

The first icon is an icon corresponding to the first multimedia information. For example, if the first multimedia information is an image, the first icon may be an image of the first multimedia information, and if the first multimedia information is a text, the first icon may be a text icon of the first multimedia information. Optionally, the first icon may be a user icon for transmitting the first multimedia information. For example, if the user A uses the terminal apparatus to send the first multimedia information, the first icon corresponding to the first multimedia information may be a head portrait, a name, or the like of the user A. In the practical application process, the first icon is the head portrait of the user sending the first multimedia information.

Optionally, when the first multimedia information is posted, if the posting area includes icons corresponding to other multimedia information, the first icon corresponding to the first multimedia information is displayed at the frontmost end of the posting area, and the icons corresponding to the other multimedia information move backwards in a sliding manner.

The multimedia page is a display page of multimedia information. For example, a plurality of multimedia information may be displayed in a multimedia page, or a plurality of multimedia information transmitted by a plurality of users may be displayed. The multimedia page comprises an information posting area, and a first icon corresponding to each piece of multimedia information is displayed in the posting area.

Next, a process of displaying a first icon corresponding to first multimedia information in an information posting area of a multimedia page is described with reference to Fig. 4.

Fig. 4 is a schematic process diagram of displaying a first icon provided by an embodiment of the present disclosure. Please refer to Fig. 4, it includes a terminal apparatus. An information editing page is displayed in a display screen of the terminal apparatus. The user adds a landscape painting in the information editing page and edits a text "finish a landscape painting". When the user finishes editing the content to be sent, the user clicks a send button, and the terminal apparatus jumps to the multimedia page.

Referring to Fig. 4, the multimedia page of the terminal apparatus includes a posting area, the posting area includes a first icon, the first icon is an icon corresponding to the multimedia information edited by the user in the information editing page, and an image of the first icon is a head portrait of the user editing the multimedia information.

S203, displaying at least one function control corresponding to the first multimedia information in the posting area within a preset time length after the first multimedia information is successfully posted.

The at least one function control is used for performing operation on the first multimedia information. For example, the function control may be at least one of the following controls: a forward control, a share control, a comment control, a like control, a save control, a copy control, and the like. The forward control is used for forwarding the first multimedia information. For example, when the user clicks a forward control corresponding to the first multimedia information, the terminal apparatus may forward the first multimedia information. The share control is used for sending the first multimedia information to other users. For example, the user clicks a share control corresponding to the first multimedia information, and selects another user to share, thereby completing the sharing operation on the first multimedia information. The comment control is used for opening a commenting area of the first multimedia information. For example, when a user clicks a comment control of the first multimedia information, the terminal apparatus may display a commenting area corresponding to the first multimedia information, and the user may input a text in the commenting area to comment on the first multimedia information. The like control is used for liking the first multimedia information. The save control is used for saving the first multimedia information in the terminal apparatus. The copy control is used for copying the link address corresponding to the first multimedia information. For example, if the user clicks the copy control corresponding to the first multimedia information, the terminal apparatus may copy the link address corresponding to the first multimedia information.

At least one function control corresponding to the first multimedia information is displayed in the posting area within a preset time length after the first multimedia information is successfully posted. For example, within 5 seconds from the successful posting of the first multimedia information, the terminal apparatus displays at least one function control corresponding to the first multimedia information in the posting area. For example, within 5 seconds from successful posting of a video, the terminal apparatus displays a first icon corresponding to the video in the posting area, and displays a forward control and a share control corresponding to the video.

According to the following feasible implementation manners, at least one function control corresponding to the first multimedia information can be displayed in the posting area: after the first multimedia information is successfully posted, determining a control area corresponding to the first multimedia information in the posting area based on the position of the first icon in the posting area. The position of the control area is adjacent to the position of the first icon. For example, after the first multimedia information is successfully posted, the posting area of the terminal apparatus may display a first icon corresponding to the first multimedia information, and display a control area at a position adjacent to the first icon. For example, the control area may be on the left, right, top, and bottom sides of the first icon, and the control area is located adjacent to the location of the first icon. Optionally, in an actual application process, the left side of the control area may be connected to the right side of the first icon, so that a user can conveniently perform operation on the first multimedia information corresponding to the first icon.

At least one function control is displayed in a control area of the posting area within a preset time length after the first multimedia information is successfully posted. For example, within 5 seconds after the first multimedia information is successfully posted, a forward control and a share control are displayed in a control area corresponding to the first icon of the first multimedia information.

The embodiment of the disclosure provides an information processing method, it includes acquiring an information posting request, in response to the posting request, displaying a first icon corresponding to first multimedia information in an information posting area of a multimedia page, determining a control area corresponding to the first multimedia information in the posting area based on the position of the first icon in the posting area after the first multimedia information is successfully posted, wherein the position of the control area is adjacent to the position of the first icon, and displaying at least one function control in the control area of the posting area within a preset time length after the first multimedia information is successfully posted. Therefore, the position of the first icon is adjacent to the position of the control area, so that a user can conveniently perform operation on the first multimedia information, the convenience of information operation is improved, and within the preset time length after the multimedia information is successfully posted, the user can directly click the function control in the control area corresponding to the first multimedia information to realize the operation on the first multimedia information, and further the complexity of performing operation on the multimedia information is reduced.

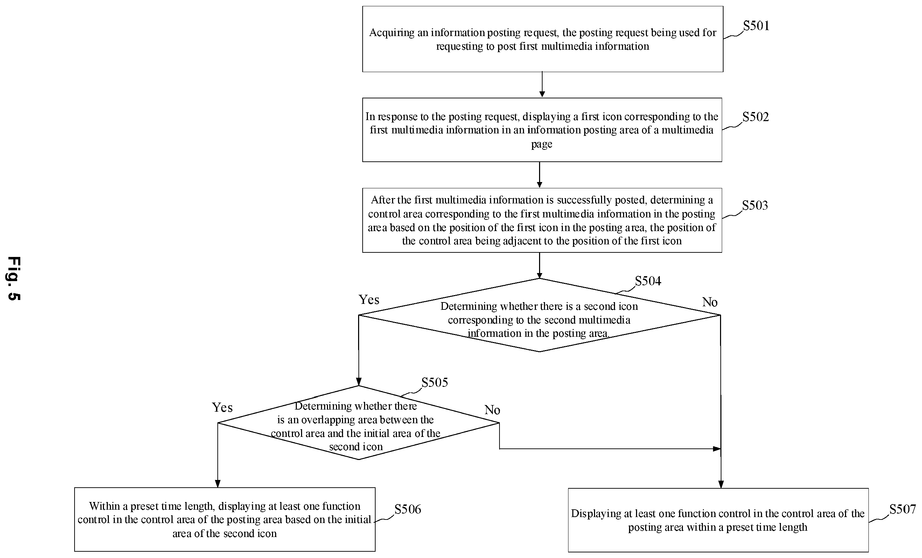

Based on the embodiment shown in Fig. 2, the following describes the procedure of the information processing method in detail with reference to Fig. 5.

Fig. 5 is a schematic flowchart of another information processing method provided by an embodiment of the present disclosure. Referring to Fig. 5, the method may include:

S501, acquiring an information posting request, wherein the posting request is used for requesting to post first multimedia information.

It should be noted that the execution process of step S501 may refer to the execution process of step S201, and details of the embodiment of the present disclosure are not repeated herein.

S502, in response to the posting request, displaying a first icon corresponding to the first multimedia information in an information posting area of a multimedia page.

Optionally, the multimedia page is a page in an instant messaging application, and the multimedia page further includes an instant conversation list. For example, a multimedia page includes a posting area and an instant conversation list, and a user may acquire an icon corresponding to the posted multimedia information in the posting area and may also receive conversation messages sent by other users in the same page. Therefore, when the user performs operation on the multimedia information, the user can still receive the conversation message, and the display flexibility of the terminal apparatus is improved, and the user experience is improved.

It should be noted that the execution process of step S502 may refer to the execution process of step S202, and details of the embodiment of the present disclosure are not repeated herein.

S503, after the first multimedia information is successfully posted, determining a control area corresponding to the first multimedia information in the posting area based on the position of the first icon in the posting area, wherein the position of the control area is adjacent to the position of the first icon.

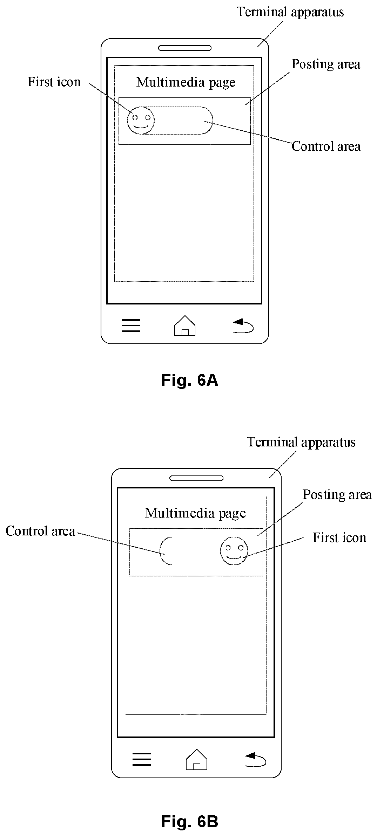

Next, the positional relationship between the control area and the first icon will be described with reference to Fig. 6A to 6B.

Fig. 6A is a schematic diagram of a position relationship between a control area and a first icon provided by an embodiment of the present disclosure. Please refer to Fig. 6A, it includes a terminal apparatus. The terminal apparatus displays a multimedia page, and the multimedia page comprises a posting area. A first icon and a control area are included in the posting area. The position of the control area is located on the right side of the position of the first icon, and the position of the control area is adjacent to the position of the first icon, namely, the left side of the control area is connected with the right side of the first icon.

Fig. 6B is a schematic diagram of a positional relationship between another control area and the first icon provided by an embodiment of the present disclosure. Please refer to Fig. 6B, it includes a terminal apparatus. The terminal apparatus displays a multimedia page, and the multimedia page comprises a posting area. A first icon and a control area are included in the posting area. The position of the control area is located on the left side of the position of the first icon, and the position of the control area is adjacent to the position of the first icon, namely, the right side of the control area is connected with the left side of the first icon.

Optionally, the control area may also be above or below the first icon. If the control area is located above the first icon, the lower side of the control area is connected to the upper side of the first icon, and if the control area is located below the first icon, the upper side of the control area is connected to the lower side of the first icon.

S504, determining whether there is a second icon corresponding to the second multimedia information in the posting area.

If there is a second icon corresponding to the second multimedia information in the posting area, S505 is executed.

If there is no second icon corresponding to the second multimedia information in the posting area, S507 is executed.

Optionally, the second multimedia information may be multimedia information before the first multimedia information is posted. Optionally, the second multimedia information may be multimedia information posted by other users. The second icon may be an icon corresponding to the second multimedia information. For example, the second icon may be a head portrait of the user who posted the second multimedia information. For example, the user A uses the terminal apparatus to post the first multimedia information, while the user B has posted the second multimedia information before the user A posts the first multimedia information, and the second icon corresponding to the second multimedia information is also displayed in the posting area of the terminal apparatus of the user A.

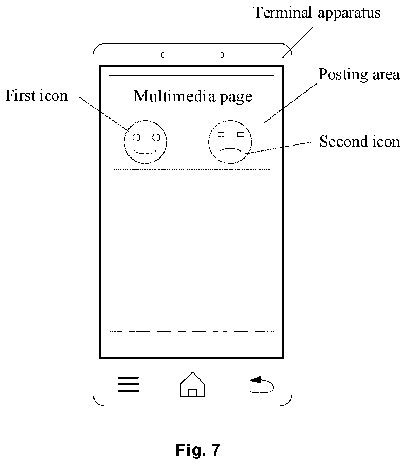

Next, referring to Fig. 7, a detailed description will be given of a case where the second icon corresponding to the second multimedia information is included in the posting area.

Fig. 7 is a schematic diagram of a posting area provided by an embodiment of the present disclosure. Please refer to Fig. 7, it includes a terminal apparatus. The posting area is included in the multimedia page of the terminal apparatus. The posting area comprises a first icon and a second icon. The second icon is an icon corresponding to second multimedia information posted by a user with a crying face as the head portrait. The first icon is an icon corresponding to first multimedia information posted by a user with a smiling face as a head portrait. The second multimedia information is posted before the first multimedia information is posted, so that after the first multimedia information is posted, there is a second icon corresponding to the posted second multimedia information in the posting area.

S505, determining whether there is an overlapping area between the control area and the initial area of the second icon.

If there is an overlapping area between the control area and the initial area of the second icon, S506 is executed.

If there is no overlapping area between the control area and the initial area of the second icon, S507 is executed.

S506, within a preset time length, displaying at least one function control in the control area of the posting area based on the initial area of the second icon.

Optionally, at least one function control may be displayed in the control area of the posting area according to a possible implementation as follows: determining an updating area corresponding to the second icon based on the control area and the initial area of the second icon. There is no overlapping area between the updating area and the control area. For example, if the position of the control area and the position of the second icon overlap, the updating area is determined at a position that does not overlap with the position of the control area. For example, if the position of the control area overlaps with the position of the second icon, an area that does not overlap with the control area is determined on the right side of the position of the control area, and this area is determined as the updating area corresponding to the second icon.

After the first multimedia information is successfully posted, a second icon is displayed in the updating area, and at least one function control is displayed in the control area. Optionally, according to the following feasible implementation manners, the second icon may be displayed in the updating area and the at least one function control may be displayed in the control area: moving the second icon from the initial area to the updating area according to a first preset speed, displaying a control area in the posting area in a sliding manner according to the first preset speed, and displaying at least one function control in the control area. For example, after the first multimedia information is successfully posted, the control area is displayed on the right side of the first icon corresponding to the first multimedia information in a sliding manner, and during displaying the control area in the sliding manner, the second icon slides from the initial area to the updating area at the same speed.

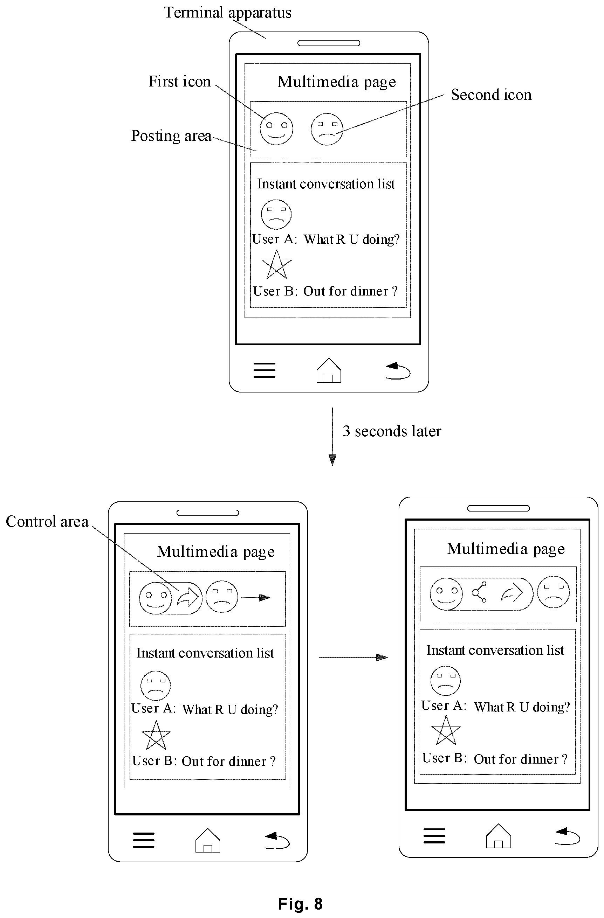

Next, with reference to Fig. 8, a process of displaying the second icon in the updating area and displaying the at least one function control in the control area will be described.

Fig. 8 is a display process of a control area provided by an embodiment of the present disclosure. Please refer to Fig. 8, it includes a terminal apparatus. The terminal apparatus comprises a multimedia page. The posting area and the instant conversation list are included in the multimedia page. The instant conversation list comprises an instant message "What R U doing?" sent by the user A to the user of the terminal apparatus and an instant message "Out for dinner? " sent by the user B to the user of the terminal apparatus, wherein the head portrait of the user A is a crying head portrait, and the head portrait of the user B is a starry head portrait. When the first multimedia information is successfully posted, the posting area comprises a first icon corresponding to the first multimedia information and a second icon corresponding to the second multimedia information.

Referring to Fig. 8, after the first multimedia information is posted for 3 seconds, at a position adjacent to the right side of the first icon, the terminal apparatus displays a control area in the posting area in a sliding manner at a first preset speed, where the control area slides and expands towards the right side and includes a forward control. When the control area slides and expands to the right at a first preset speed, the second icon moves from the initial area to the updating area at the first preset speed, wherein the updating area is located on the right side of the initial area, and the second icon moves to the right side of the second icon at the first preset speed.

Referring to Fig. 8, when the control area is completely expanded, the second icon moves to the updating area, where the updating area does not overlap with the control area, and the control area includes a forward button and a share button. When the second icon moves to the updating area, the second icon stops moving.

Optionally, after the preset time length, the display of the at least one function control is cancelled, and the second icon is displayed in the initial area of the second icon. Optionally, according to the following possible implementation manners, the display of the at least one function control is cancelled, and the second icon is displayed in the initial area of the second icon: moving the second icon from the updating area to the initial area according to a second preset speed, and canceling the display of the control area and the at least one function control in the posting area in a sliding manner according to the second preset speed. The first preset speed and the second preset speed may be the same or different, and this is not limited in the embodiment of the present disclosure. For example, after the control area is displayed for the preset time length, the display of the control area is canceled in a sliding manner, and in the process of canceling the display of the control area in a sliding manner, the second icon slides from the updating area to the initial area at the same speed.

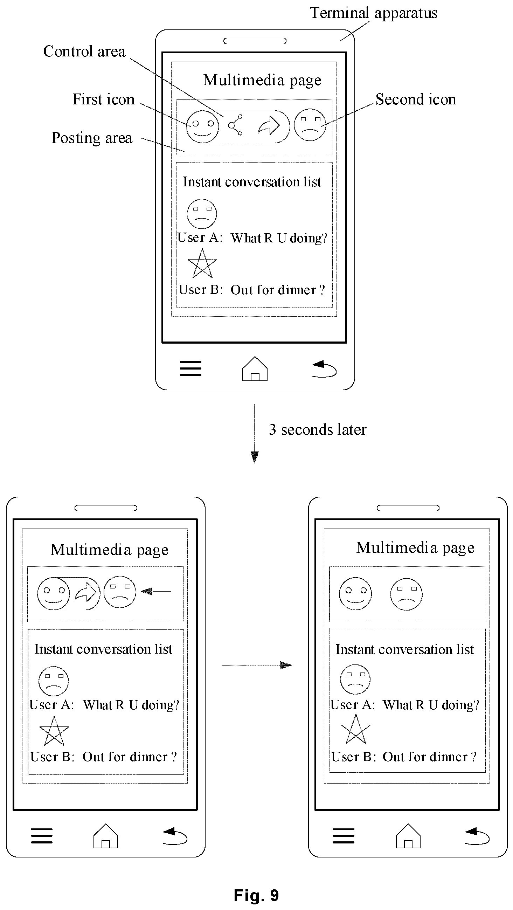

Next, a process of canceling display of the at least one function control and displaying the second icon in the initial area of the second icon will be described with reference to Fig. 9.

Fig. 9 is a schematic process diagram of canceling display of a control area provided by an embodiment of the present disclosure. Please refer to Fig. 9, it includes a terminal apparatus. The terminal apparatus comprises a multimedia page. The posting area and the instant conversation list are included in the multimedia page. The instant conversation list comprises an instant message "What R U doing?" sent by the user A to the user of the terminal apparatus and an instant message "Out for dinner? " sent by the user B to the user of the terminal apparatus, wherein the head portrait of the user A is a crying head portrait, and the head portrait of the user B is a starry head portrait. The posting area comprises a first icon corresponding to the first multimedia information, a second icon corresponding to the second multimedia information and a control area. The control area comprises a share control and a forward control.

Referring to Fig. 9, when the user does not perform click operation on the share control or the forward control within 3 seconds, the terminal apparatus cancels display of the control area in the posting area in a sliding manner at a second preset speed, where the control area slides to the left at the second preset speed to cancel the display, and the control area includes the forward control. In the process that the control area slides leftwards at a second preset speed to cancel the display, the second icon moves from the updating area to the initial area at the second preset speed, wherein the initial area is positioned at the left side of the updating area, and the second icon moves to the left side of the second icon at the second preset speed. When the display of the control area is cancelled, the second icon moves to the initial area.

S507, displaying at least one function control in the control area of the posting area within a preset time length.

According to a possible implementation as follows, at least one function control may be displayed in a control area of the posting area: after the first multimedia information is successfully posted, displaying a control area in a sliding manner in the posting area, displaying at least one function control in the control area, and after a preset time length, canceling the display of the control area and the at least one function control in the posting area in the sliding manner.

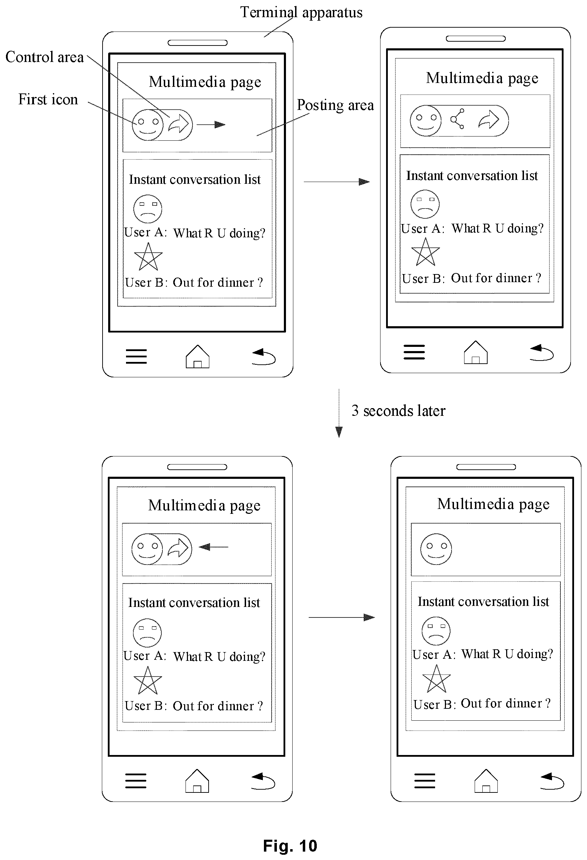

Next, a process of displaying at least one function control in the control area of the posting area in this case will be described with reference to Fig. 10.

Fig. 10 is a schematic process diagram of displaying another control area provided by the embodiment of the present disclosure. Please refer to Fig. 10, it includes a terminal apparatus. The terminal apparatus comprises a multimedia page. The posting area and the instant conversation list are included in the multimedia page. The instant conversation list comprises an instant message "What R U doing?" sent by the user A to the user of the terminal apparatus and an instant message "Out for dinner? " sent by the user B to the user of the terminal apparatus, wherein the head portrait of the user A is a crying head portrait, and the head portrait of the user B is a starry head portrait. The posting area comprises a first icon and a control area corresponding to the first multimedia information. The control area comprises a forward control.

Referring to Fig. 10, when the second icon is not included in the posting area, after the first multimedia information is successfully posted, the terminal apparatus displays a control area in a sliding manner in the posting area, wherein the control area is located adjacent to and on the right side of the first icon, and the control area moves to the right in a sliding manner. When the control area is completely displayed, the control area stops moving, and at this moment, the control area comprises a share control and a forward control.

Referring to Fig. 10, when the user does not perform click operation on the share control or the forward control within 3 seconds, the terminal apparatus cancels display of the control area in the posting area in a sliding manner according to a preset speed, where the control area slides to the left at the preset speed to cancel the display, and the control area includes the forward control. When the display of the control area is completely canceled, the posting area does not comprise the control area and the share control and the forward control in the control area, and the posting area comprises a first icon corresponding to the first multimedia information.

Optionally, when the at least one function control includes a forward control, the terminal apparatus may further display a forwarding page in response to a click operation on the forward control. The forwarding page comprises a first icon. For example, when the control area includes a forward control, if the user performs click operation on the forward control, the terminal apparatus may display a forwarding page including the first icon, and may also display first multimedia information corresponding to the first icon in the forwarding page, which is not limited by the present disclosure.

The disclosed embodiments provide an information processing method wherein an information posting request is acquired, and in response to the posting request, a first icon corresponding to the first multimedia information is displayed in an information posting area of the multimedia page. After the first multimedia information is successfully posted, a control area corresponding to the first multimedia information in a posting area is determined based on the position of the first icon in the posting area, wherein the control area is adjacent to the first icon. Whether there is a second icon corresponding to the second multimedia information in the posting area is determined. If yes, and there is an overlapping area between the control area and the initial area of the second icon, at least one function control is displayed in the control area of the posting area within a preset time length based on the initial area of the second icon. If not, at least one function control is displayed in the control area of the posting area within the preset time length. Therefore, the position of the first icon is adjacent to the position of the control area, so that the user can conveniently perform operation on the first multimedia information and the convenience of operation on the information is improved. The manner of displaying the control area is sliding display, and the display effect is improved. Within the preset time length after the multimedia information is successfully posted, the user can directly click the function control in the control area corresponding to the first multimedia information, to realize the operation on the first multimedia information, and the complexity of performing operation on the multimedia information is reduced.

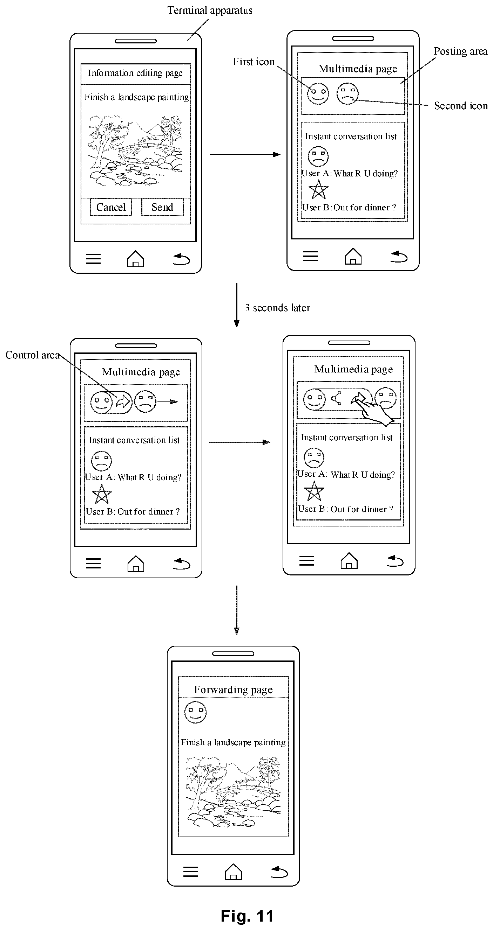

On the basis of any of the above embodiments, the following describes a procedure of the above information processing method with reference to Fig. 11.

Fig. 11 is a schematic process diagram of an information processing method provided by an embodiment of the present disclosure. Please refer to Fig. 11, it includes a terminal apparatus. An information editing page is displayed in a display screen of the terminal apparatus. The user adds a landscape painting in the information editing page and edits a text "finish a landscape painting". A cancel button and a send button are included in the information editing page. When the user finishes editing the content to be sent, the user clicks the send button, and the terminal apparatus acquires an information posting request corresponding to the content to be sent.

Referring to Fig. 11, when the content to be sent is successfully sent, the terminal apparatus jumps to a multimedia page, where the multimedia page includes a posting area and an instant conversation list. The instant conversation list comprises an instant message "What R U doing?" sent by the user A to the user of the terminal apparatus and an instant message "Out for dinner? " sent by the user B to the user of the terminal apparatus, wherein the head portrait of the user A is a crying head portrait, and the head portrait of the user B is a starry head portrait. The posting area comprises a first icon corresponding to the first multimedia information and a second icon corresponding to the second multimedia information. The first multimedia information is the content to be sent edited by the user in the previous step, and the second multimedia information is the historical multimedia information sent by the user A.

Referring to Fig. 11, after 3 seconds since the first multimedia information is sent, the terminal apparatus displays a control area in the posting area in a sliding manner according to a first preset speed at a position adjacent to the right side of the first icon, where the control area slides and expands towards the right side, and the control area includes a forward control. When the control area slides and expands to the right at the first preset speed, the second icon moves from the initial area to the updating area at the first preset speed, wherein the updating area is located on the right side of the initial area, and the second icon moves to the right side of the second icon at the first preset speed. When the control area is completely expanded, the second icon is moved to the updating area, wherein the positions of the updating area and the control area are not overlapped, and the control area comprises a forward button and a share button. When the second icon moves to the updating area, the second icon stops moving.

Referring to Fig. 11, when the control area includes the share control and the forward control, if the user clicks the forward control, the terminal apparatus responds to the user's clicking operation and jumps to a forwarding page, where the forwarding page includes a first icon corresponding to the first multimedia information and the first multimedia information edited by the user. Therefore, within a preset time length after the multimedia information is successfully posted, a control area comprising the share control and the forward control can be displayed in the posting area, and a user can directly click the forward control in the control area corresponding to the multimedia information to realize the forwarding operation on the multimedia information, so that the complexity of performing operation on the multimedia information is reduced.

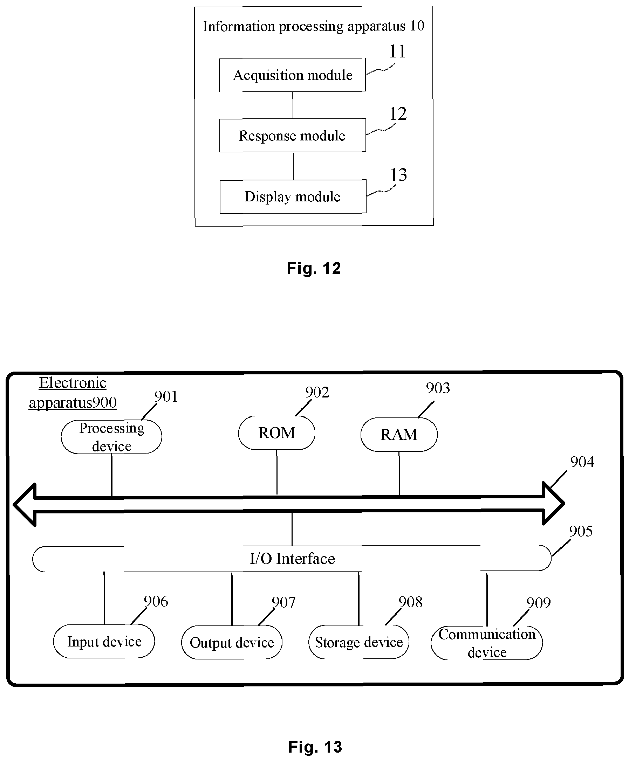

Fig. 12 is a schematic structural diagram of an information processing apparatus provided by an embodiment of the present disclosure. Referring to Fig. 12, the information processing apparatus includes an acquisition module 11, a response module 12, and a display module 13, wherein:
the acquisition module 11 is configured to acquire an information posting request, wherein the posting request is used for requesting to post first multimedia information;
the response module 12 is configured to, in response to the posting request, display a first icon corresponding to the first multimedia information in an information posting area of a multimedia page;
the display module 13 is configured to display at least one function control corresponding to the first multimedia information in the posting area within a preset time length after the first multimedia information is successfully posted, wherein the at least one function control is used for performing operation on the first multimedia information.

In a possible implementation, the display module 13 is specifically configured to:
after the first multimedia information is successfully posted, determine a control area corresponding to the first multimedia information in the posting area based on a position of the first icon in the posting area, wherein a position of the control area is adjacent to the position of the first icon; and
display the at least one function control in the control area of the posting area within the preset time length after the first multimedia information is successfully posted.

In a possible implementation, the display module 13 is specifically configured to:
determine whether there is a second icon corresponding to second multimedia information in the posting area;
if there is a second icon corresponding to second multimedia information in the posting area, determine whether there is an overlapping area between the control area and an initial area of the second icon, and if there is an overlapping area between the control area and the initial area of the second icon, display the at least one function control in the control area of the posting area based on the initial area of the second icon within the preset time length; if there is no overlapping area between the control area and the initial area of the second icon, display the at least one function control in the control area of the posting area within the preset time length; and
if there is no second icon corresponding to the second multimedia information in the posting area, display the at least one function control in the control area of the posting area within the preset time length.

In a possible implementation, the display module 13 is specifically configured to:
determine an updating area corresponding to the second icon based on the control area and the initial area of the second icon, wherein there is no overlapping area between the updating area and the control area;
after the first multimedia information is successfully posted, display the second icon in the updating area and display the at least one function control in the control area; and
after a preset time length, cancel display of the at least one function control, and display the second icon in the initial area of the second icon.

In a possible implementation, the display module 13 is specifically configured to:
move the second icon from the initial area to the updating area according to a first preset speed; and
display the control area in the posting area in a sliding manner according to the first preset speed, and display the at least one function control in the control area.

In a possible implementation, the display module 13 is specifically configured to:
move the second icon from the updating area to the initial area according to a second preset speed; and
cancel display of the control area and the at least one function control in the posting area in a sliding manner according to the second preset speed.

In a possible implementation, the display module 13 is specifically configured to:
after the first multimedia information is successfully posted, display the control area in the posting area in a sliding manner, and display the at least one function control in the control area; and
after a preset length of time, cancel display of the control area and the at least one function control in the posting area in the sliding manner.

In a possible implementation, the display module 13 is further configured to:
in response to a click operation on the forward control, displaying a forwarding page, wherein the forwarding page comprises the first icon.

In a possible implementation, the multimedia page is a page in an instant messaging application, the multimedia page further comprises an instant conversation list.

The information processing apparatus provided by this embodiment may be configured to implement the technical solutions of the method embodiments, and the implementation principle and the technical effects are similar, which are not described herein again.

Fig. 13 is a schematic structural diagram of an electronic apparatus provided by an embodiment of the present disclosure. Referring to Fig. 13, a schematic structural diagram of an electronic apparatus 900 suitable for implementing the embodiment of the present disclosure is shown, where the electronic apparatus 900 may be a terminal apparatus or a server. Among them, the terminal apparatus may include, but is not limited to, a mobile terminal such as a mobile phone, a notebook computer, a digital broadcast receiver, a Personal Digital Assistant (PDA), a Portable Android Device (PAD), a Portable Multimedia Player (PMP), vehicle-mounted terminals (such as vehicle- mounted navigation terminals) and so forth, and a fixed terminal such as a Digital TV, a desktop computer and so forth. The electronic apparatus shown in Fig. 13 is only an example, and should not bring any limitation to the functions and the scope of use of the embodiments of the present disclosure.

As shown in Fig. 13, the electronic apparatus 900 may include a processing device (e.g., a central processing unit, a graphics processor and so forth) 901, which may perform various suitable actions and processes according to a program stored in a Read Only Memory (ROM) 902 or a program loaded from a storage device 908 into a Random Access Memory (RAM) 903. In the RAM 903, various programs and data necessary for the operation of the electronic apparatus 900 are also stored. The processing apparatus 901, ROM 902, and RAM 903 are connected to each other via a bus 904. An Input/Output (I/O) interface 905 is also connected to bus 904.

Generally, the following devices may be connected to the I/O interface 905: input device 906 including, for example, a touch screen, touch pad, keyboard, mouse, camera, microphone, accelerometer, gyroscope and so forth; an output device 907 including, for example, a Liquid Crystal Display (LCD), a speaker, a vibrator, and the like; storage 908 including, for example, magnetic tape, hard disk and so forth; and a communication device 909. The communication device 909 may allow the electronic apparatus 900 to communicate with other apparatuses wirelessly or via wire to exchange data. While Fig. 13 illustrates an electronic apparatus 900 having various device, it is to be understood that not all illustrated device are required to be implemented or provided. More or fewer devices may be alternatively implemented or provided.

In particular, the processes described above with reference to the flow diagrams may be implemented as computer software programs, according to embodiments of the present disclosure. For example, embodiments of the present disclosure include a computer program product comprising a computer program embodied on a computer-readable medium, the computer program comprising program code for performing the method illustrated by the flow chart. In such an embodiment, the computer program may be downloaded and installed from a network through the communication device 909, or installed from the storage device 908, or installed from the ROM 902. The computer program, when executed by the processing device 901, performs the above-described functions defined in the methods of the embodiments of the present disclosure.

It should be noted that the computer readable medium of the present disclosure may be a computer readable signal medium or a computer readable storage medium or any combination of the two. A computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a RAM, a ROM, an Erasable Programmable Read-Only Memory (EPROM or flash Memory), an optical fiber, a portable Compact Disc Read-Only Memory (CD-ROM), an optical storage device, a magnetic storage device, or any suitable combination of the foregoing. In the present disclosure, a computer readable storage medium may be any tangible medium that can contain, or store a program for use by or in connection with an instruction execution system, apparatus, or device. In contrast, in the present disclosure, a computer readable signal medium may include a propagated data signal with computer readable program code embodied therein, for example, in baseband or as part of a carrier wave. Such a propagated data signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to: electrical wires, optical cables, Radio Frequency (RF) and so forth, or any suitable combination of the foregoing.

The computer readable medium may be embodied in the electronic apparatus; or may be separate and not incorporated into the electronic apparatus.

The computer readable medium carries one or more programs which, when executed by the electronic apparatus, cause the electronic apparatus to perform the method shown in the above embodiments.

Computer program code for carrying out operations for aspects of the present disclosure may be written in any combination of one or more programming languages, including an object oriented programming language such as Java, Smalltalk, C + +, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of Network, including a Local Area Network (LAN) or a Wide Area Network (WAN), or the connection may be made to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function. It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and computer instructions.

The units described in the embodiments of the present disclosure may be implemented by software or hardware. Where the name of a unit does not in some cases constitute a limitation of the unit itself.

The functions described herein above may be performed, at least in part, by one or more hardware logic components. For example, without limitation, exemplary types of hardware logic components that may be used include: a Field Programmable Gate Array (FPGA), an Application Specific Integrated Circuit (ASIC), an Application Specific Standard Part (ASSP), a System On Chip (SOC), a Complex Programmable Logic Device (CPLD), and so on.

In the context of this disclosure, a machine-readable medium may be a tangible medium that can contain, or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a RAM, a ROM, an EPROM or flash memory, an optical fiber, a CD-ROM, an optical storage device, a magnetic storage device, or any suitable combination of the foregoing.

In a first aspect, according to one or more embodiments of the present disclosure, an information processing method is provided, comprising:
acquiring an information posting request, wherein the posting request is used for requesting to post first multimedia information;
in response to the posting request, displaying a first icon corresponding to the first multimedia information in an information posting area of a multimedia page; and
displaying at least one function control corresponding to the first multimedia information in the posting area within a preset time length after the first multimedia information is successfully posted, wherein the at least one function control is used for performing operation on the first multimedia information.

In a possible implementation, the displaying at least one function control corresponding to the first multimedia information in the posting area within a preset time length after the first multimedia information is successfully posted comprises:
after the first multimedia information is successfully posted, determining a control area corresponding to the first multimedia information in the posting area based on a position of the first icon in the posting area, wherein a position of the control area is adjacent to the position of the first icon; and
displaying the at least one function control in the control area of the posting area within the preset time length after the first multimedia information is successfully posted.

In a possible implementation, the displaying the at least one function control in the control area of the posting area within the preset time length after the first multimedia information is successfully posted comprises:
determining whether there is a second icon corresponding to second multimedia information in the posting area;
if there is a second icon corresponding to second multimedia information in the posting area, determining whether there is an overlapping area between the control area and an initial area of the second icon, and if there is an overlapping area between the control area and the initial area of the second icon, displaying the at least one function control in the control area of the posting area based on the initial area of the second icon within the preset time length; if there is no overlapping area between the control area and the initial area of the second icon, displaying the at least one function control in the control area of the posting area within the preset time length; and
if there is no second icon corresponding to the second multimedia information in the posting area, displaying the at least one function control in the control area of the posting area within the preset time length.

In a possible implementation, the displaying the at least one function control in the control area of the posting area based on the initial area of the second icon within the preset length of time comprises:
determining an updating area corresponding to the second icon based on the control area and the initial area of the second icon, wherein there is no overlapping area between the updating area and the control area;
after the first multimedia information is successfully posted, displaying the second icon in the updating area and displaying the at least one function control in the control area; and
after a preset time length, canceling display of the at least one function control, and displaying the second icon in the initial area of the second icon.

In a possible implementation, the displaying the second icon in the updating area and displaying the at least one function control in the control area comprises:
moving the second icon from the initial area to the updating area according to a first preset speed; and
displaying the control area in the posting area in a sliding manner according to the first preset speed, and displaying the at least one function control in the control area.

In a possible implementation, the canceling display of the at least one function control, and displaying the second icon in the initial area of the second icon comprises:
moving the second icon from the updating area to the initial area according to a second preset speed; and
canceling display of the control area and the at least one function control in the posting area in a sliding manner according to the second preset speed.

In a possible implementation, the displaying the at least one function control in the control area of the posting area within the preset time length comprises:
after the first multimedia information is successfully posted, displaying the control area in the posting area in a sliding manner, and displaying the at least one function control in the control area; and
after a preset length of time, canceling display of the control area and the at least one function control in the posting area in the sliding manner.

In a possible implementation, the at least one function control comprises a forward control; the method further comprises:
in response to a click operation on the forward control, displaying a forwarding page, wherein the forwarding page comprises the first icon.

In a possible implementation, the multimedia page is a page in an instant messaging application, the multimedia page further comprises an instant conversation list.

In the second aspect, the embodiments of the present disclosure provide an information processing apparatus comprising an acquisition module, a response module, and a display module, wherein:
the acquisition module is configured to acquire an information posting request, wherein the posting request is used for requesting to post first multimedia information;
the response module is configured to, in response to the posting request, display a first icon corresponding to the first multimedia information in an information posting area of a multimedia page;
the display module is configured to display at least one function control corresponding to the first multimedia information in the posting area within a preset time length after the first multimedia information is successfully posted, wherein the at least one function control is used for performing operation on the first multimedia information.

In a possible implementation, the display module is specifically configured to:
after the first multimedia information is successfully posted, determine a control area corresponding to the first multimedia information in the posting area based on a position of the first icon in the posting area, wherein a position of the control area is adjacent to the position of the first icon; and
display the at least one function control in the control area of the posting area within the preset time length after the first multimedia information is successfully posted.

In a possible implementation, the display module is specifically configured to:
determine whether there is a second icon corresponding to second multimedia information in the posting area;
if there is a second icon corresponding to second multimedia information in the posting area, determine whether there is an overlapping area between the control area and an initial area of the second icon, and if there is an overlapping area between the control area and the initial area of the second icon, display the at least one function control in the control area of the posting area based on the initial area of the second icon within the preset time length; if there is no overlapping area between the control area and the initial area of the second icon, display the at least one function control in the control area of the posting area within the preset time length; and
if there is no second icon corresponding to the second multimedia information in the posting area, display the at least one function control in the control area of the posting area within the preset time length.

In a possible implementation, the display module is specifically configured to:
determine an updating area corresponding to the second icon based on the control area and the initial area of the second icon, wherein there is no overlapping area between the updating area and the control area;
after the first multimedia information is successfully posted, display the second icon in the updating area and display the at least one function control in the control area; and
after a preset time length, cancel display of the at least one function control, and display the second icon in the initial area of the second icon.

In a possible implementation, the display module is specifically configured to:
move the second icon from the initial area to the updating area according to a first preset speed; and
display the control area in the posting area in a sliding manner according to the first preset speed, and display the at least one function control in the control area.

In a possible implementation, the display module is specifically configured to:
move the second icon from the updating area to the initial area according to a second preset speed; and
cancel display of the control area and the at least one function control in the posting area in a sliding manner according to the second preset speed.

In a possible implementation, the display module is specifically configured to:
after the first multimedia information is successfully posted, display the control area in the posting area in a sliding manner, and display the at least one function control in the control area; and
after a preset length of time, cancel display of the control area and the at least one function control in the posting area in the sliding manner.

In a possible implementation, the display module is further configured to:
in response to a click operation on the forward control, displaying a forwarding page, wherein the forwarding page comprises the first icon.

In a possible implementation, the multimedia page is a page in an instant messaging application, the multimedia page further comprises an instant conversation list.

In the third aspect, the embodiments of the present disclosure provide an electronic apparatus, comprising: a processor and a memory;
the memory stores computer execution instructions;
the processor executes computer-executable instructions stored by the memory, causing the processor to perform the information processing method described in the first aspect and various possible designs of the first aspect.

In the fourth aspect, the embodiments of the present disclosure provide a computer-readable storage medium having stored therein computer-executable instructions that, when executed by a processor, implement the information processing method described in the first aspect and various possible designs of the first aspect.

In the fifth aspect, the embodiments of the present disclosure provide a computer program product, including a computer program, which when executed by a processor, implements the information processing method described in the first aspect and various possible designs of the first aspect.

In the sixth aspect, the embodiment of the present disclosure provides a computer program that, when executed by a processor, implements the information processing method described in the first aspect and various possible designs of the first aspect.

Further, while operations are depicted in a particular order, this should not be understood as requiring that such operations be performed in the particular order shown or in sequential order. Under certain circumstances, multitasking and parallel processing may be advantageous. Likewise, while several specific implementation details are included in the above discussion, these should not be construed as limitations on the scope of the disclosure. Certain features that are described in the context of separate embodiments can also be implemented in combination in a single embodiment. Conversely, various features that are described in the context of a single embodiment can also be implemented in multiple embodiments separately or in any suitable sub-combination.

## Claims

1. An information processing method, comprising:
acquiring (S201; S501) an information posting request, wherein the information posting request is used for requesting to post first multimedia information;
in response to the information posting request, displaying (S202; S502) a first icon corresponding to the first multimedia information in an information posting area of a multimedia page, the multimedia page being a display page of multimedia information;
within a preset time length after the first multimedia information is successfully posted, determining a control area corresponding to the first multimedia information in the posting area based on a position of the first icon in the posting area, wherein a position of the control area is adjacent to the position of the first icon; and
displaying (S203; S506; S507) at least one function control corresponding to the first multimedia information in the control area of the posting area within the preset time length after the first multimedia information is successfully posted, wherein the at least one function control is used for performing operation on the first multimedia information; and
after the preset time length, canceling display of the at least one function control in a sliding manner according to a second preset speed and retaining display of the information posting area and the first icon corresponding to the first multimedia information.

2. The method of claim 1, **characterized in that** the displaying the at least one function control in the control area of the posting area within the preset time length after the first multimedia information is successfully posted comprises:
determining (S504) whether there is a second icon corresponding to second multimedia information in the posting area;
if there is a second icon corresponding to second multimedia information in the posting area, determining (S505) whether there is an overlapping area between the control area and an initial area of the second icon, and if there is an overlapping area between the control area and the initial area of the second icon, displaying (S506) the at least one function control in the control area of the posting area based on the initial area of the second icon within the preset time length; if there is no overlapping area between the control area and the initial area of the second icon, displaying (S507) the at least one function control in the control area of the posting area within the preset time length; and
if there is no second icon corresponding to the second multimedia information in the posting area, displaying (S507) the at least one function control in the control area of the posting area within the preset time length.

3. The method of claim 2, **characterized in that** the displaying (S506) the at least one function control in the control area of the posting area based on the initial area of the second icon within the preset length of time comprises:
determining an updating area corresponding to the second icon based on the control area and the initial area of the second icon, wherein there is no overlapping area between the updating area and the control area;
after the first multimedia information is successfully posted, displaying the second icon in the updating area and displaying the at least one function control in the control area; and
after a preset time length, canceling display of the at least one function control, and displaying the second icon in the initial area of the second icon.

4. The method of claim 3, **characterized in that** the displaying the second icon in the updating area and displaying the at least one function control in the control area comprises:
moving the second icon from the initial area to the updating area according to a first preset speed; and
displaying the control area in the posting area in a sliding manner according to the first preset speed, and displaying the at least one function control in the control area.

5. The method of claim 3, **characterized in that** the after the preset time length, canceling display of the at least one function control comprises:
if there is an overlapping area between the control area and the initial area of the second icon, after the preset time length, moving the second icon from the updating area to the initial area according to the second preset speed;
canceling display of the control area and the at least one function control in the posting area in a sliding manner according to the second preset speed; and
if there is no overlapping area between the control area and the initial area of the second icon, after the preset time length, canceling display of the control area and the at least one function control in the posting area in the sliding manner according to the second preset speed.

6. The method of claim 2, **characterized in that** the displaying the at least one function control in the control area of the posting area within the preset time length comprises:
after the first multimedia information is successfully posted, displaying the control area in the posting area in a sliding manner, and displaying the at least one function control in the control area.

7. The method of claim 1, **characterized in that** the at least one function control comprises a forward control, and the method further comprises:
in response to a click operation on the forward control, displaying a forwarding page, wherein the forwarding page comprises the first icon.

8. The method of claim 1, **characterized in that** the multimedia page is a page in an instant messaging application, the multimedia page further comprises an instant conversation list.

9. An information processing apparatus (10) comprising an acquisition module (11), a response module (12), and a display module (13), wherein:
the acquisition module (11) is configured to acquire an information posting request, wherein the information posting request is used for requesting to post first multimedia information;
the response module (12) is configured to, in response to the information posting request, display a first icon corresponding to the first multimedia information in an information posting area of a multimedia page, the multimedia page being a display page of multimedia information;
the display module (13) is configured to, within a preset time length after the first multimedia information is successfully posted, determine a control area corresponding to the first multimedia information in the posting area based on a position of the first icon in the posting area, wherein a position of the control area is adjacent to the position of the first icon;
the display module (13) is further configured to display at least one function control corresponding to the first multimedia information in the control area of the posting area within the preset time length after the first multimedia information is successfully posted, wherein the at least one function control is used for performing operation on the first multimedia information, and
the display module (13) is further configured to, after the preset time length, cancel display of the at least one function control in a sliding manner according to a second preset speed and retain display of the information posting area and the first icon corresponding to the first multimedia information.

10. An electronic apparatus, comprising: a processor (901) and a memory (908);
the memory stores computer execution instructions;
the processor is configured to execute computer-executable instructions stored by the memory, causing the processor to implement the information processing method of any one of claims 1 to 8.

11. A computer-readable storage medium having stored therein computer-executable instructions, wherein the computer-executable instructions, when executed by a processor, implement the information processing method of any one of claims 1 to 8.

## Patentansprüche

1. Informationsverarbeitungsverfahren, umfassend:
Beziehen (S201; S501) einer Informationsveröffentlichungsanfrage, wobei die Informationsveröffentlichungsanfrage zum Anfragen verwendet wird, erste Multimediainformationen zu veröffentlichen;
als Antwort auf die Informationsveröffentlichungsanfrage, Anzeigen (S202; S502) eines ersten Symbols, das den ersten Multimediainformationen entspricht, in einem Informationsveröffentlichungsbereich einer Multimediaseite, wobei die Multimediaseite eine Anzeigeseite für Multimediainformationen ist;
innerhalb einer voreingestellten Zeitspanne, nachdem die ersten Multimediainformation erfolgreich veröffentlicht wurden, Bestimmen eines Steuerbereichs, der den ersten Multimediainformationen entspricht, im Veröffentlichungsbereich, basierend auf einer Position des ersten Symbols im Veröffentlichungsbereich, wobei eine Position des Steuerungsbereichs an die Position des ersten Symbols angrenzt; und
Anzeigen (S203; S506; S507) mindestens eines Funktionssteuerelements, das den ersten Multimediainformationen entspricht, im Steuerbereich des Veröffentlichungsbereichs innerhalb der voreingestellten Zeitspanne, nachdem die ersten Multimediainformationen erfolgreich veröffentlicht wurden, wobei das mindestens eine Funktionssteuerelement zum Durchführen einer Operation an den ersten Multimediainformationen verwendet wird; und
nach der voreingestellten Zeitspanne, Beenden einer Anzeige des mindestens einen Funktionssteuerelements durch ein Gleiten gemäß einer zweiten voreingestellten Geschwindigkeit und Beibehalten der Anzeige des Informationsveröffentlichungsbereichs und des ersten Symbols, das den ersten Multimediainformationen entspricht.

2. Verfahren nach Anspruch 1, **dadurch gekennzeichnet, dass** das Anzeigen des mindestens einen Funktionssteuerelements im Steuerbereich des Veröffentlichungsbereichs innerhalb der voreingestellten Zeitspanne, nachdem die ersten Multimediainformationen erfolgreich veröffentlicht wurden, Folgendes umfasst:
Bestimmen (S504), ob es im Veröffentlichungsbereich ein zweites Symbol gibt, das zweiten Multimediainformationen entspricht;
falls es ein zweites Symbol, das zweiten Multimediainformationen entspricht, im Veröffentlichungsbereich gibt, Bestimmen (S505), ob es einen Überlappungsbereich zwischen dem Steuerbereich und einem Anfangsbereich des zweiten Symbols gibt, und falls es einen Überlappungsbereich zwischen dem Steuerbereich und dem Anfangsbereich des zweiten Symbols gibt, Anzeigen (S506) des mindestens einen Funktionssteuerelements im Steuerbereich des Veröffentlichungsbereichs, basierend auf dem Anfangsbereich des zweiten Symbols innerhalb der voreingestellten Zeitspanne; wenn es keinen Überlappungsbereich zwischen dem Steuerbereich und dem Anfangsbereich des zweiten Symbols gibt, Anzeigen (S507) des mindestens einen Funktionssteuerelements im Steuerbereich des Veröffentlichungsbereichs innerhalb der voreingestellten Zeitspanne; und
falls es kein zweites Symbol gibt, das den zweiten Multimediainformationen im Veröffentlichungsbereich entspricht, Anzeigen (S507) des mindestens einen Funktionssteuerelements im Steuerbereich des Veröffentlichungsbereichs innerhalb der voreingestellten Zeitspanne.

3. Verfahren nach Anspruch 2, **dadurch gekennzeichnet, dass** das Anzeigen (S506) des mindestens einen Funktionssteuerelements im Steuerbereich des Veröffentlichungsbereichs basierend auf dem Anfangsbereich des zweiten Symbols innerhalb der voreingestellten Zeitspanne Folgendes umfasst:
Bestimmen eines Aktualisierungsbereichs, der dem zweiten Symbol entspricht, basierend auf dem Steuerbereich und dem Anfangsbereich des zweiten Symbols, wobei es keinen Überlappungsbereich zwischen dem Aktualisierungsbereich und dem Steuerbereich gibt;
nachdem die ersten Multimediainformationen erfolgreich veröffentlicht wurden, Anzeigen des zweiten Symbols im Aktualisierungsbereich und Anzeigen des mindestens einen Funktionssteuerelements im Steuerbereich; und
nach einer voreingestellten Zeitspanne, Beenden einer Anzeige des mindestens einen Funktionssteuerelements und Anzeigen des zweiten Symbols im Anfangsbereich des zweiten Symbols.

4. Verfahren nach Anspruch 3, **dadurch gekennzeichnet, dass** das Anzeigen des zweiten Symbols im Aktualisierungsbereich und Anzeigen des mindestens einen Funktionssteuerelements im Steuerbereich Folgendes umfasst:
Bewegen des zweiten Symbols vom Anfangsbereich zum Aktualisierungsbereich gemäß einer voreingestellten Geschwindigkeit; und
Anzeigen des Steuerbereichs im Veröffentlichungsbereich durch ein Gleiten gemäß der ersten voreingestellten Geschwindigkeit, und Anzeigen des mindestens einen Funktionssteuerelements im Steuerbereich.

5. Verfahren nach Anspruch 3, **dadurch gekennzeichnet, dass** das Beenden, nach der voreingestellten Zeitspanne, einer Anzeige des mindestens einen Funktionssteuerelements Folgendes umfasst:
wenn es einen Überlappungsbereich zwischen dem Steuerbereich und dem Anfangsbereich des zweiten Symbols gibt, Bewegen, nach der voreingestellten Zeitspanne, des zweiten Symbols vom Aktualisierungsbereich zum Anfangsbereich gemäß der zweiten voreingestellten Geschwindigkeit;
Beenden eines Anzeigens des Steuerbereichs und des mindestens einen Funktionssteuerelements im Veröffentlichungsbereich durch ein Gleiten gemäß der zweiten voreingestellten Geschwindigkeit; und
wenn es keinen Überlappungsbereich zwischen dem Steuerbereich und dem Anfangsbereich des zweiten Symbols gibt, Beenden, nach der voreingestellten Zeitspanne, einer Anzeige des Steuerbereichs und des mindestens einen Funktionssteuerelements im Veröffentlichungsbereich durch das Gleiten gemäß der zweiten voreingestellten Geschwindigkeit.

6. Verfahren nach Anspruch 2, **dadurch gekennzeichnet, dass** das Anzeigen des mindestens einen Funktionssteuerelements im Steuerbereich des Veröffentlichungsbereichs innerhalb der voreingestellten Zeitspanne Folgendes umfasst:
nachdem die ersten Multimediainformationen erfolgreich veröffentlicht wurden, Anzeigen des Steuerbereichs im Veröffentlichungsbereich durch ein Gleiten, und Anzeigen des mindestens einen Funktionssteuerelements im Steuerbereich.

7. Verfahren nach Anspruch 1, **dadurch gekennzeichnet, dass** das mindestens eine Funktionssteuerelement eine Weiterleitungssteuerelement umfasst, und das Verfahren ferner umfasst:
als Reaktion auf eine Klick-Operation an dem Weiterleitungssteuerelement, Anzeigen einer Weiterleitungsseite, wobei die Weiterleitungsseite das erste Symbol umfasst.

8. Verfahren nach Anspruch 1, **dadurch gekennzeichnet, dass** die Multimediaseite eine Seite in einer Sofortnachrichten-Anwendung ist, wobei die Multimediaseite ferner eine Liste von Sofortkonversationen umfasst.

9. Informationsverarbeitungseinrichtung (10), umfassend ein Bezugsmodul (11), ein Antwortmodul (12) und ein Anzeigemodul (13), wobei:
das Bezugsmodul (11) dazu konfiguriert ist, eine Informationsveröffentlichungsanfrage zu beziehen, wobei die Informationsveröffentlichungsanfrage zum Anfragen verwendet wird, erste Multimediainformationen zu veröffentlichen;
das Antwortmodul (12) dazu konfiguriert ist, als Antwort auf die Informationsveröffentlichungsanfrage ein erstes Symbol, das den ersten Multimediainformationen entspricht, in einem Informationsveröffentlichungsbereich einer Multimediaseite anzuzeigen, wobei die Multimediaseite eine Anzeigeseite für Multimediainformationen ist;
das Anzeigemodul (13) dazu konfiguriert ist, innerhalb einer voreingestellten Zeitspanne, nachdem die ersten Multimediainformation erfolgreich veröffentlicht wurden, einen Steuerbereich, der den ersten Multimediainformationen entspricht, im Veröffentlichungsbereich zu bestimmen, basierend auf einer Position des ersten Symbols im Veröffentlichungsbereich, wobei eine Position des Steuerungsbereichs an die Position des ersten Symbols angrenzt;
das Anzeigemodul (13) ferner dazu konfiguriert ist, mindestens ein Funktionssteuerelement, das den ersten Multimediainformationen entspricht, im Steuerbereich des Veröffentlichungsbereichs innerhalb der voreingestellten Zeitspanne, nachdem die ersten Multimediainformationen erfolgreich veröffentlicht wurden anzuzeigen, wobei das mindestens eine Funktionssteuerelement zum Durchführen einer Operation an den ersten Multimediainformationen verwendet wird, und
das Anzeigemodul (13) ferner dazu konfiguriert ist, nach der voreingestellten Zeitspanne eine Anzeige des mindestens einen Funktionssteuerelements durch ein Gleiten gemäß einer zweiten voreingestellten Geschwindigkeit zu beenden und die Anzeige des Informationsveröffentlichungsbereichs und des ersten Symbols, das den ersten Multimediainformationen entspricht, beizubehalten.

10. Elektronische Einrichtung, umfassend:
einen Prozessor (901) und einen Speicher (908);
wobei der Speicher Computerausführungsanweisungen speichert;
wobei der Prozessor dazu konfiguriert ist, Speicher gespeicherte computerausführbare Anweisungen auszuführen, wodurch der Prozessor veranlasst wird, das Informationsverarbeitungsverfahren nach einem der Ansprüche 1 bis 8 zu implementieren.

11. Computerlesbares Speichermedium, das computerausführbare Anweisungen darauf gespeichert aufweist, wobei die computerausführbaren Anweisungen, wenn sie von einem Prozessor ausgeführt werden, das Informationsverarbeitungsverfahren nach einem der Ansprüche 1 bis 8 implementieren.

## Revendications

1. Procédé de traitement d'informations, comprenant :
l'acquisition (S201 ; S501) d'une demande de publication d'informations, dans lequel la demande de publication d'informations est utilisée pour demander la publication de premières informations multimédias ;
en réponse à la demande de publication d'informations, l'affichage (S202 ; S502) d'une première icône correspondant aux premières informations multimédias dans une zone de publication d'informations d'une page multimédia, la page multimédia étant une page d'affichage d'informations multimédias ;
dans un délai prédéfini après la publication réussie des premières informations multimédias, la détermination d'une zone de commande correspondant aux premières informations multimédias dans la zone de publication sur la base d'une position de la première icône dans la zone de publication, dans lequel une position de la zone de commande est adjacente à celle de la première icône ; et
l'affichage (S203 ; S506 ; S507) d'au moins une commande de fonction correspondant aux premières informations multimédias dans la zone de commande de la zone de publication dans le délai prédéfini après la publication réussie des premières informations multimédias, dans lequel la ou les commandes de fonction sont utilisées pour réaliser une opération sur les premières informations multimédias ; et
après le délai prédéfini, l'annulation de l'affichage de la ou des commandes de fonction par glissement selon une seconde vitesse prédéfinie, et le maintien de l'affichage de la zone de publication d'informations et de la première icône correspondant aux premières informations multimédias.

2. Procédé selon la revendication 1, **caractérisé en ce que** l'affichage de la ou des commandes de fonction dans la zone de commande de la zone de publication dans le délai prédéfini après la publication réussie des premières informations multimédias comprend :
la détermination (S504) s'il existe une seconde icône correspondant à des secondes informations multimédias dans la zone de publication ;
s'il existe une seconde icône correspondant à des secondes informations multimédias dans la zone de publication, la détermination (S505) s'il existe une zone de chevauchement entre la zone de commande et une zone initiale de la seconde icône et, s'il existe une zone de chevauchement entre la zone de commande et la zone initiale de la seconde icône, l'affichage (S506) de la ou des commandes de fonction dans la zone de commande de la zone de publication sur la base de la zone initiale de la seconde icône dans le délai prédéfini ; s'il n'existe aucune zone de chevauchement entre la zone de commande et la zone initiale de la seconde icône, l'affichage (S507) de la ou des commandes de fonction dans la zone de commande de la zone de publication dans le délai prédéfini ; et
s'il n'y a pas de seconde icône correspondant aux secondes informations multimédias dans la zone de publication, l'affichage (S507) de la ou des commandes de fonction dans la zone de commande de la zone de publication dans le délai prédéfini.

3. Procédé selon la revendication 2, **caractérisé en ce que** l'affichage (S506) de la ou des commandes de fonction dans la zone de commande de la zone de publication sur la base de la zone initiale de la seconde icône dans le délai prédéfini, comprend :
la détermination d'une zone de mise à jour correspondant à la seconde icône sur la base de la zone de commande et de la zone initiale de la seconde icône, dans lequel il n'y a pas de zone de chevauchement entre la zone de mise à jour et la zone de commande ;
une fois les premières informations multimédias publiées avec succès, l'affichage de la seconde icône dans la zone de mise à jour et l'affichage de la ou des commandes de fonction dans la zone de commande ; et
après un délai prédéfini, l'annulation de l'affichage de la ou des commandes de fonction, et l'affichage de la seconde icône dans la zone initiale de la seconde icône.

4. Procédé selon la revendication 3, **caractérisé en ce que** l'affichage de la seconde icône dans la zone de mise à jour et l'affichage de la ou des commandes de fonction dans la zone de commande comprennent :
le déplacement de la seconde icône de la zone initiale vers la zone de mise à jour selon une première vitesse prédéfinie ; et
l'affichage de la zone de commande dans la zone de publication par glissement selon la première vitesse prédéfinie, et l'affichage de la ou des commandes de fonction dans la zone de commande.

5. Procédé selon la revendication 3, **caractérisé en ce que**, après le délai prédéfini, l'annulation de l'affichage de la ou des commandes de fonction comprend :
s'il existe une zone de chevauchement entre la zone de commande et la zone initiale de la seconde icône, après le délai prédéfini, le déplacement de la seconde icône de la zone de mise à jour vers la zone initiale selon la deuxième vitesse prédéfinie ;
l'annulation de l'affichage de la zone de commande et de la ou des commandes de fonction dans la zone de publication par glissement selon la deuxième vitesse prédéfinie ; et
s'il n'y a pas de zone de chevauchement entre la zone de commande et la zone initiale de la seconde icône, après le délai prédéfini, l'annulation de l'affichage de la zone de commande et de la ou des commandes de fonction dans la zone de publication par glissement selon la deuxième vitesse prédéfinie.

6. Procédé selon la revendication 2, **caractérisé en ce que** l'affichage de la ou des commandes de fonction dans la zone de commande de la zone de publication dans le délai prédéfini comprend :
une fois les premières informations multimédias publiées avec succès, l'affichage de la zone de commande dans la zone de publication par glissement et l'affichage de la ou des commandes de fonction dans la zone de commande.

7. Procédé selon la revendication 1, **caractérisé en ce que** la ou les fonctions de commande comprennent une commande de redirection, et le procédé comprend en outre :
en réponse à une opération de clic sur la commande de redirection, l'affichage d'une page de redirection, dans lequel la page de redirection comprend la première icône.

8. Procédé selon la revendication 1, **caractérisé en ce que** la page multimédia est une page d'une application de messagerie instantanée, la page multimédia comprenant en outre une liste de conversations instantanées.

9. Appareil de traitement d'informations (10) comprenant un module d'acquisition (11), un module de réponse (12) et un module d'affichage (13), dans lequel :
le module d'acquisition (11) est configuré pour acquérir une demande de publication d'informations, dans lequel la demande de publication d'informations est utilisée pour demander la publication de premières informations multimédias ;
le module de réponse (12) est configuré pour, en réponse à la demande de publication d'informations, afficher une première icône correspondant aux premières informations multimédias dans une zone de publication d'informations d'une page multimédia, la page multimédia étant une page d'affichage d'informations multimédias ;
le module d'affichage (13) est configuré pour, dans un délai prédéfini après la publication réussie des premières informations multimédias, déterminer une zone de commande correspondant aux premières informations multimédias dans la zone de publication sur la base d'une position de la première icône dans la zone de publication, dans lequel une position de la zone de commande est adjacente à la position de la première icône ;
le module d'affichage (13) est en outre configuré pour afficher au moins une commande de fonction correspondant aux premières informations multimédias dans la zone de commande de la zone de publication dans le délai prédéfini après la publication réussie des premières informations multimédias, dans lequel la ou les commandes de fonction sont utilisées pour réaliser une opération sur les premières informations multimédias, et
le module d'affichage (13) est en outre configuré pour, après le délai prédéfini, annuler l'affichage de la ou des commandes de fonction par glissement selon une seconde vitesse prédéfinie et maintenir l'affichage de la zone de publication d'informations et de la première icône correspondant aux premières informations multimédias.

10. Appareil électronique, comprenant :
un processeur (901) et une mémoire (908) ;
la mémoire stocke des instructions exécutables par ordinateur ;
le processeur est configuré pour exécuter des instructions exécutables par ordinateur stockées dans la mémoire, ce qui amène le processeur à mettre en œuvre le procédé de traitement d'informations selon l'une quelconque des revendications 1 à 8.

11. Support de stockage lisible par ordinateur sur lequel sont stockées des instructions exécutables par ordinateur, dans lequel les instructions exécutables par ordinateur, lorsqu'elles sont exécutées par un processeur, mettent en œuvre le procédé de traitement d'informations selon l'une quelconque des revendications 1 à 8.
